# EUROPÄISCHE PATENTSCHRIFT

(11) **EP 0 672 020 B1**
(45) Veröffentlichungstag und Bekanntmachung des Hinweises auf die Patenterteilung: **24.04.1996**
(21) Anmeldenummer: 94900623.3
(22) Anmeldetag: 02.12.1993
(51) Int. Cl.: C01B 17/50, C01F 5/06

(54) **VERFAHREN UND ANLAGE ZUR TROCKNUNG UND ANSCHLIESSENDER SPALTUNG**
DRYING AND SEPARATING PROCESS AND PLANT
PROCEDE ET INSTALLATION DE SECHAGE SUIVI DE DISSOCIATION

(30) Priorität: 04.12.1992 AT 2399/92
(43) Veröffentlichungstag der Anmeldung: 20.09.1995
(73) Patentinhaber: AUSTRIAN ENERGY & ENVIRONMENT SGP/WAAGNER-BIRO GmbH, A-1210 Wien (AT); Lenzing Aktiengesellschaft, A-4860 Lenzing (AT)
(72) Erfinder: BAMMER, Josef, A-4860 Lenzing (AT); BLOCHER, Bernhard, A-8605 Kapfenberg (AT); GLASER, Wolfgang, A-8052 Graz (AT); LOQUENZ, Heinz, A-8043 Graz (AT); STAUFER, Walter, A-4863 Seewalchen (AT); YALDEZ, Peter, A-8042 Graz (AT)
(74) Vertreter: Wallner, Gerhard, Dipl.-Ing.
(86) Internationale Anmeldenummer: AT9300182
(87) Internationale Veröffentlichungsnummer: WO9413580

(56) Entgegenhaltungen:
- DE-B- 1 199 741
- FR-A- 2 094 193
- FR-A- 2 264 878
- US-A- 3 826 812

## Beschreibung

Die Erfindung betrifft ein Verfahren zur Trocknung und anschließender Spaltung von feuchten Magnesiumsulfit aus einer nassen SO₂- Absorptionsanlage in MgO, SO₂ und Wasserdampf, wobei der Trockner durch eine Feststoffschleuse von der Spaltungsanlage getrennt ist und das abgespaltene SO₂ zur Erhitzung der für die Beheizung der Spaltungsanlage notwendigen Verbrennungsluft dient und das von der Spaltungsanlage abströmende Abgas zur Beheizung des Trockners herangezogen wird und eine Anlage zur Durchführung des Verfahrens.

Bei Chemikalienrückgewinnungsanlagen (AT-PS 347.235) und bei nassen Entschwefelungsanlagen auf Basis MgO fällt das Salz MgSO₃ bzw. Mg(HSO₃)₂ im feuchten bzw. gelösten Zustand an. Wird dieses Salz zur Rückgewinnung der Bestandteile gespalten, so fallen bei hohen Temperaturen saure Dämpfe, wie z. B. SO₂-Wasserdampfgemische an, die bei Abkühlung (Kondensation des Wasserdampfes) sehr stark korrosiv sind und auch die zu gewinnende Säure verdünnen bzw. die Säure in den Korrosionsprodukten gebunden wird. Damit wird die Wärmerückgewinnung erschwert, der Apparateaufwand steigt und die Wirtschaftlichkeit sinkt. Die korrosiven Dämpfe beanspruchen die Apparate, so daß der Erhaltungsaufwand bzw. Erneuerungsaufwand die Wirtschaftlichkeit der Chemikalienrückgewinnungsanlage noch weiter senkt.

Die DE-B-1 199 74 offenbart ein ähnliches Verfahren zur Schwefeldioxidgewinnung unter Verwendung von ZnO, wobei das Hauptproblem die Vermeidung der Sulfatisierung des Zinks im Spaltungsreaktor ist. Diese Problemstellung tritt bei dem beanspruchten Verfahren nicht auf, wobei die Hauptschwierigkeit in den auftretenden Korrosionen und im großen Wärmebedarf der Anlage zu sehen ist.

Die erfindungsgemäße Aufgabe ist den angeführten Nachteilen durch die Trennung der Gase zu begegnen. Überraschenderweise sind die durch das reine (trockene) Säureanhydrid (SO₂) beanspruchten Bauteile weniger als erwartet korrosiv beansprucht, so daß die Wirtschaftlichkeit der Anlage wider Erwarten hoch ist.

Das erfinderungsgemäße Verfahren ist dadurch gekennzeichnet, daß der Trockner durch Umwälzung eines Brüdenteilstromes, der durch Wärmetausch mit dem Abgas aus der Spaltungsanlage beheizt wird, auf mehr als 200° C erhitzt wird und im Trockner neben der dem Salz anhaftenden Feuchtigkeit auch das Kristallwasser, insbesondere vollständig, ausgetrieben wird. Vorzugsweise wird in der Spaltungsanlage SO₂ mit einem Reinheitswert von mehr als 70 % erzeugt und das staubförmige MgO zur Rückführung in die SO₂-Absorptionsanlage erzeugt.

Die erfindungsgemäße Anlage zur Durchführung des Verfahrens ist dadurch gekennzeichnet, daß die Spaltungsanlage als indirekt beheizter Drehrohrofen und der Trockner als direkt beheizter Drehrohrofen bzw. als Wirbelbetttrockner, insbesondere mit in das Wirbelbett eintauchenden Heizflächen, ausgebildet ist und eine Rückführungsleitung für einen Teilstrom des im Trockner anfallenden Wasserdampfgemisches über einen Wärmetauscher vorgesehen ist, der an die Spaltungswärmeanlage abgasseitig angeschlossen ist. Vorzugsweise ist die Trocknungs- und Spaltungsanlage in einer SO₂-Absorptionsanlage, insbesondere für die Rückgewinnung der Kochsäure einer Zellstoffgewinnung, wärmetechnisch und fabrikationsmäßig eingebunden. Weitere wesentliche Einrichtungsmerkmale sind in den Unteransprüchen 5 bis 10 angegeben.

Darüberhinaus gestattet die Erfindung eine nahezu rückstandsfreie Entschwefelung von kalorischen Kraftwerksabgasen, indem das Metalloxid (MgO) wieder zur Absorption verwendet wird und als SO₂ und gegebenenfalls CO₂ in verkaufsfähigem Zustand anfällt. Die Erfindung läßt sich sogar durch Verwendung von Dolomit als Absorptionsmittel zur wirtschaftlichen Herstellung von Rein-MgO verwenden, wobei dann allerdings das auch rein anfallende Kalziumsulfit zur Verwertung bzw. Deponierung anfällt, mit dem Vorteil, daß durch die Gewinnung des MgO-Anteiles die Gesamt-Kalziumsulfitmenge gegenüber SO₂-Absorptionsanlagen auf Kalkbasis auf etwa 50 % reduziert wird, so daß die Aufnahmefähigkeit des Gipsmarktes nicht überbeansprucht wird. Ein weiterer Anwendungsfall ist die Gewinnung von Rein-CO₂ aus Verbrennungsabgasen auf Kalkbasis, bei der die Brennung des Kalkes außerhalb der Verbrennung erfolgt und das CaO bzw.

Ca(OH)₂ zur Absorption des CO₂-hältigen, praktisch SO₂-freien Abgases verwendet wird. Der anfallende Kalkschlamm (CaCO₃) wird dann getrocknet und das Kristallwasser zum größten Teil ausgetrieben, worauf das wasserfreie CaCO₃ thermisch gespalten wird und das Kalziumoxid wieder der Absorption zugeführt wird.

Die Erfindung ist in der angeschlossenen Figur in Form eines Schaltbildes beispielsweise und schematisch dargestellt.

Das erzeugte Salz wird im feuchten Zustand, also mit anhaftendem Wasser und mit im Kristallaufbau eingebundenen Wasser (Kristallwasser), in den Trockner 2 eingeführt, wobei der Wassergehalt vollständig an das Heizungsmedium übertragen wird. Bei der Ausbildung des Trockners als Drehrohrofen und als Wirbelbetttrockner wird dem Heizmedium (Brüde) im Trockner sehr viel Staub aufgeladen, dem Trockner entnommen und nach einer Entstaubungsanlage 4, beispielsweise Zyklon, wieder dem Trockner zugeführt, wobei der Staub dem eingetragenen Salz zugeführt und die Brüde nach einer Aufheizung im Wärmetauscher 5 wieder dem Trockner 2 zugeführt wird. Vor der Aufheizung wird die Überschußbrüde abgezweigt und ihr Wärmeinhalt einer Verwertung zugeführt. Das getrocknete Salz, dem nun auch das Kristallwasser entzogen wurde, wird über eine Feststoffschleuse 3 der Spaltungsanlage 1 zugeführt, in welcher das Säureanhydrid vom Metalloxid getrennt wird. Die Gas/Feststofftrennung erfolgt relativ einfach. Die Spaltungsanlage wird indirekt beheizt, so daß das Beheizungsgas mit dem zu trocknenden Medium nicht in Berührung kommt. Dadurch wird erreicht, daß sich im Spaltungsraum praktisch reines Säureanhydrid, in den meisten Fällen SO₂ bzw. CO₂, ansammelt, welches sich infolge des Fehlens des Wasserdampfgehaltes nicht in Säure umwandeln kann, so daß praktisch keine Taupunktsprobleme auftreten können und die Anlagenteile entsprechend korrosionsgeschützt sind. Ein Teil des rezirkulierten Abgases aus der Spaltungsanlage wird in der Verbrennungsanlage 12 aufgeheizt und zwar in dem Ausmaß, daß das Abgas der Verbrennungsanlage 12, welches in die Spaltungsanlage eintritt, knapp über der Spaltungstemperatur liegt. Die Abgasrezirkulierung führt zu einer Reduktion des NOₓ-Gehaltes. Dieses Abgas wird zuerst im bereits erwähnten Wärmetauscher 5 zur Erhitzung der Kreislaufbrüde für den Trockner 2 abgekühlt und strömt schließlich in den Lufterhitzer 13, in dem die Luft für die Verbrennungsanlage 12 und gegebenenfalls Dampferzeuger 9 vorgewärmt wird. Diese Luft wird noch in einem zweiten Lufterhitzer 14 weiter erhitzt, bei dem das aus der Spaltungsanlage 1 austretende Säureanhydrid hauptsächlich SO₂ von der Spaltungstemperatur abgekühlt wird. Das abgekühlte Abgas enthält neben dem Sauerstoff noch einen relativ großen Wärmeinhalt und kann daher als vorerhitzter Sauerstoffträger im Dampferzeuger 9 beispielsweise einer Laugenverbrennungsanlage 16 zur Erhöhung des Wärmeumsatzes eingesetzt werden. Der Dampferzeuger 9 wird durch den Brennstoff 10 (Ablauge) beheizt. Die Verbrennungsluft wird durch einen Dampfluftvorwärmer 8 erhitzt, wobei der Dampf die vorhin erwähnte Überschußbrüde aus dem Trockner 2 ist, die in einem Kompressor 7 verdichtet und damit auch erhitzt wurde. Ein Teil der Verbrennungsluft kann dabei über die Luftvorwärmer 13 und 14 herangeführt werden. Der Dampferzeuger 9 kann ein ölbefeuerter Kraftwerkskessel sein, dessen Abgas SO₂-hältig ist, bei dem das SO₂ durch eine Metalloxidaufschlämmung, wie z. B. MgO, unter Bildung von MgSO₃ absorbiert wird, wobei sich das Salz (MgSO₃) als unlöslicher Bodensatz im Absatztrichter der Reinigungsanlage ansammelt, der schließlich als Wasser/Salz-Gemisch in den Trockner, vorzugsweise nach einer Entwässerung, eingeführt wird. Für einen Kraftwerkskessel ergibt sich nun der Vorteil, daß das Absorptionsmittel in der Anlage selbst erzeugt wird, und daß das Schadstoff-SO₂ praktisch rein und hochkonzentriert, also verkaufsfähig, anfällt. Die wirtschaftliche Bedeutung liegt nun in einer Abgasentschwefelungsanlage, die keiner Deponie bedarf. Wird der Dampferzeuger 9 in einer Zellstoffabrik auf Magnesiumbisulfitbasis eingesetzt, wie durch das Bezugszeichen 16 angedeutet, so wird als Brennstoff 10 die Zellstoffablauge verwendet, und das Abgas enthält relativ viel SO₂, so daß zwischen der SO₂-Absorptionsanlage 6 und dem Dampferzeuger 9 eine Bisulfiterzeugungsanlage 11 zwischengeschaltet werden kann, über die das im Zellstoffprozeß notwendige Magnesiumbisulfit hergestellt wird. Das restliche SO₂ kann dann auf die vorhin erwähnte Art aus dem Abgas absorbiert, gewonnen bzw. dem Zellstoffprozeß bereitgestellt werden. Die Anlage gestattet ferner auch die Gewinnung des CO₂ aus den SO₂-freien Abgasen von Kraftwerkskesselanlagen, wobei beispielsweise als Absorptionsmittel Kalk bzw. CaO verwendet bzw. recycled wird. Das Abgas aus der Spaltungsanlage 1, welches einen Teil seines Wärmeinhaltes an den Wärmetauscher 5 bzw. Lufterhitzer 13 abgegeben hat, kann nun je nach verbleibendem Wärmeinhalt im Dampferzeuger 9, insbesondere bei erhöhtem Sauerstoffgehalt, in die Brennkammer oder in das Abgas vor dem Kamin, bei hohem SO₂-Gehalt aber auch vor der Sulfiterzeugung 15, eingemischt werden.

Die Anlage kann ferner auch zur Rein-MgO-Gewinnung aus Dolomit verwendet werden, wobei allerdings Kalziumsulfit, wenn es nicht für die Gipserzeugung verwendet werden kann, als Deponiegut anfällt. Selbstverständlich wird dann auch nur ein Teil des SO₂ aus dem Abgas des Dampferzeugers 9 rückgewonnen.

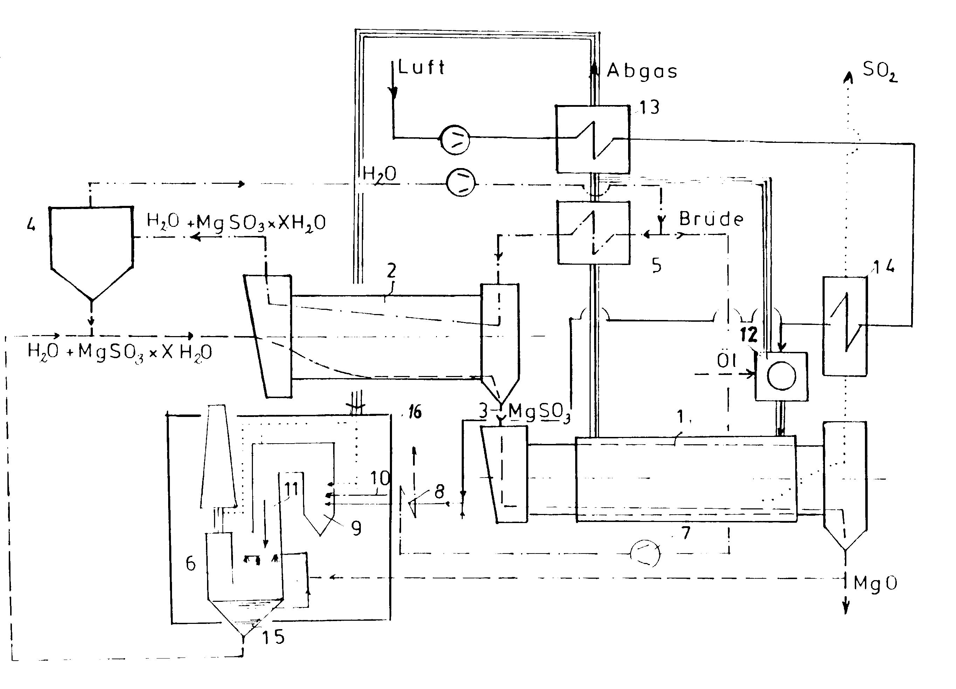

## Patentansprüche

1. Verfahren zur Trocknung und anschließenden Spaltung von feuchten Magnesiumsulfit aus einer nassen SO₂-Absorptionsanlage in MgO, SO₂ und Wasserdampf, wobei der Trockner durch eine Feststoffschleuse von der Spaltungsanlage getrennt ist und das abgespaltene SO₂, zur Erhitzung der für die Beheizung der Spaltungsanlage notwendigen Verbrennungsluft dient und das von der Spaltungsanlage abströmende Abgas zur Beheizung des Tockners herangezogen wird, dadurch gekennzeichnet, daß der Trockner (2) durch Umwälzung eines Brüdenteilstromes, der durch Wärmetausch mit dem Abgas aus der Spaltungsanlage (1) beheizt wird, auf mehr als 200° C erhitzt wird und im Trockner neben der dem Salz anhaftenden Feuchtigkeit auch das Kristallwasser, insbesondere vollständig, ausgetrieben wird.

2. Verfahren nach Anspruch 1, dadurch gekennzeichnet, daß in der Spaltungsanlage (1) SO₂ mit einem Reinheitsgehalt von mehr als 70 % erzeugt und das staubförmige MgO zur Rückführung in die SO₂-Absorptionsanlage (6) erzeugt wird.

3. Anlage zur Durchführung des Verfahrens nach Anspruch 1 oder 2, dadurch gekennzeichnet, daß die Spaltungsanlage (1) als indirekt beheizter Drehrohrofen und der Trockner (2) als direkt beheizter Drehrohrofen bzw. als Wirbelbetttrockner, insbesondere mit in das Wirbelbett eintauchenden Heizflächen, ausgebildet ist, und daß eine Rückführungsleitung für einen Teilstrom des im Trockner anfallenden Wasserdampfgemisches (Brüde) über einen Wärmetauscher (5) vorgesehen ist, der an die Spaltungsanlage (1) abgasseitig angeschlossen ist.

4. Anlage nach Anspruch 3, dadurch gekennzeichnet, daß die Trocknungs- und Spaltungsanlage (1, 2) in einer SO₂-Absorptionsanlage (6), insbesondere für die Rückgewinnung der Kochsäure einer Zellstoffgewinnung, wärmetechnisch und fabrikationsmäßig eingebunden sind.

5. Anlage nach Anspruch 3, dadurch gekennzeichnet, daß die Trocknungs- und Spaltungsanlage (1, 2) in einer SO₂-Absorptionsanlage (6) eines kalorischen Kraftwerkes eingebunden sind und das abgespaltene SO₂ gewonnen, insbesondere verflüssigt, wird.

6. Anlage nach Anspruch 3, dadurch gekennzeichnet, daß nach dem Trockner (2) brüdenseitig eine Entstaubungsanlage (4) angeordnet ist, die staubseitig an der Eingangsseite des Trockners (2) angeschlossen ist und brüdenseitig teilweise einer Brüdenverwertung und teilweise nach einer Aufheizung in einem Wärmetauscher (5) wieder an den Trockner (2) dampfseitig angeschlossen ist.

7. Anlage nach Anspruch 3, dadurch gekennzeichnet, daß die Spaltungsanlage (1) abgasseitig an einen Wärmetauscher (5) im Heizungskreislauf für den Trockner (2) angeschlossen ist.

8. Anlage nach Anspruch 4 oder 5, dadurch gekennzeichnet, daß die SO₂-Absorptionsanlage (6) schlammseitig, insbesondere nach einer Eindickung des Schlammes mit dem Trockner (2) verbunden ist und daß die Spaltunganlage (1) festproduktseitig mit dem Flüssigkeitskreislauf der SO₂-Absorptionsanlage (6) verbunden ist.

9. Anlage nach Anspruch 3, dadurch gekennzeichnet, daß der nicht rezirkulierte Brüdenteilstrom über einen Kompressor (7) wärmetechnisch mit dem Dampfluftvorwärmer (8) des Dampferzeugers (9) vor der SO₂-Absorptionsanlage (6) verbunden ist.

10. Anlage nach Anspruch 3, dadurch gekennzeichnet, daß der sauerstoffreiche Abgasstrom der Spaltungsanlage (1) nach der Wärmerückgewinnung für die Trocknungsanlage (2) und Spaltungsanlage (1) in die Brennkammer des Dampferzeugers (9) vor der SO₂-Absorptionsanlage (6) als Sauerstoffträger eingebunden ist.

## Claims

1. Process for drying and subsequent separation of moist magnesium sulphite from a wet SO₂ absorption plant into MgO, SO₂ and steam, wherein the drying device is separated from the separation plant by a solid material sluice, and the separated SO₂ is used to heat the combustion air required for heating the separation plant, and the waste gas flowing out of the separation plant is used for heating the drying device, characterised in that the drying device (2) is heated to more than 200°C by circulating a partial exhaust vapour flow, which is heated by heat exchange with the waste gas from the separation plant (1) and, in addition to the moisture adhering to the salt in the drying device, the water of crystallisation is also, in particular completely, expelled.

2. Process according to Claim 1, characterised in that in the separation plant (1) SO₂ with a purity of more than 70% is formed and the MgO in powder form is generated for return into the SO₂ absorption plant (6).

3. Plant for conducting the process according to Claim 1 or 2, characterised in that the separation plant (1) is constructed as an indirectly heated rotary tubular furnace and the drying device (2) is constructed as a directly heated rotary tubular furnace or as a fluidised bed dryer, in particular with heating surfaces submerging into the fluidised bed, and that a return pipe is provided for a partial flow of the steam mixture (exhaust vapours) collecting in the drying device via a heat exchanger (5) connected on the waste gas side to the separation plant (1).

4. Plant according to Claim 3, characterised in that the drying and separation plant (1, 2) are integrated thermally and structurally into an SO₂ absorption plant (6), in particular for recovery of the boiling acid from pulp production.

5. Plant according to Claim 3, characterised in that the drying and separation plant (1, 2) is integrated into an SO₂ absorption plant (6) of a thermal power station and the separated SO₂ is prepared, in particular liquefied.

6. Plant according to Claim 3, characterised in that a dust precipitator plant (4) is arranged on the exhaust vapour side downstream of the drying device (2), said dust precipitator plant being connected on the dust side to the inlet side of the drying device (2), and part of it is connected on the exhaust side for utilisation of the exhaust vapours and part of it is connected again to the drying device (2) on the steam side after heating in a heat exchanger (5).

7. Plant according to Claim 3, characterised in that the separation plant (1) is connected on the waste gas side to a heat exchanger (5) in the heating circuit for the drying device (2).

8. Plant according to Claim 4 or 5, characterised in that the SO₂ absorption plant (6) is connected to the drying device (2) on the sludge side, in particular after the sludge has thickened, and that the separation plant (1) is connected to the liquid circuit of the SO₂ absorption plant (6) on the solid side.

9. Plant accodint to Claim 3, characterised in that the partial exhaust vapour flow which is not recirculated is thermally connected via a compressor (7) to the steam air preheater (8) of the steam generator (9) upstream of the SO₂ absorption plant (6).

10. Plant according to Claim 3, characterised in that the high-oxygen waste gas stream of the separation plant (1) is passed into the combustion chamber of the steam generator (9) upstream of the SO₂ absorption plant (6) as oxygen carrier after heat has been recovered for the drying plant (2) and separation plant (1).

## Revendications

1. Procédé de séchage, suivi d'une dissociation de sulfite de magnésium humide, provenant d'une installations d'absorption de SO₂ humide, dans du MgO,SO₂ et de la vapeur d'eau, étant entendu que le sécheur est séparé, par un sas de matière solide, de l'installation de dissociation, que le SO₂ séparé sert à réchauffer l'air de combustion nécessaire pour chauffer l'installation de dissociation, et que le gaz de rejet s'écoulant de l'installation de dissociation est extrait pour chauffer le sécheur, caractérisé en ce que le sécheur (2) est chauffé à plus de 200°C par inversion d'une partie du courant de buées, elle-même chauffée par échange thermique avec le gaz de rejet provenant de l'installation de dissociation (1), et en ce que, dans le sécheur, à côté de l'humidité adhérant au sel, l'eau de cristallisation est également extraite, en particulier complètement.

2. Procédé suivant la revendication 1, caractérisé en ce que, dans la l'installation de dissociation (1), du SO₂ est produit avec une teneur en produit pur de plus de 70%, et en ce que le MgO, sous forme de poudre, est produit pour être renvoyé dans l'installation d'absorption de SO₂ (6).

3. Installation pour la mise en oeuvre du procédé de la revendications 1 ou de la revendication 2, caractérisée en ce que l'installation de dissociation (1) est réalisée sous la forme d'un four tubulaire tournant à chauffe indirecte, et que le sécheur (2) est réalisé sous la forme d'un four tubulaire tournant à chauffe directe, ou sous la forme d'un sécheur à lit fluidisé, en particulier comportant des surfaces de chauffe baignant dans le lit fluidisé, et en ce qu'il est prévu une conduite de retour pour une partie du courant du mélange de vapeur d'eau (buées) produit dans le sécheur, qui est raccordé, par l'intermédiaire d'un échangeur thermique (5), coté gaz de rejet, à l'installation de dissociation (1).

4. Installation suivant la revendication 3, caractérisée en ce que les installations de séchage et de dissociation (1, 2) sont intégrées, du point de vue thermique et du point de vue fabrication, dans une installation d'absorption de SO₂ (6), en particulier pour la récupération des acides du bain d'une production de cellulose.

5. Installation suivant la revendication 3, caractérisée en ce que les installations de séchage et de dissociation (1, 2) sont intégrées dans une installation d'absorption de SO₂ (6) d'une centrale thermique et que le SO₂ séparé est récupéré, en particulier sous forme liquéfié.

6. Installation suivant la revendication 3, caractérisée en ce qu'après le sécheur (2), côté buées, est raccordée une installation de dépoussiérage (4), qui est elle même raccordée, côté poussières, à l'entrée du sécheur (2) et est, de nouveau, raccordée au sécheur (2), côté buées, pour partie, à un récupérateur de buées, et, pour partie, après réchauffage, à un échangeur de chaleur (5).

7. Installation suivant la revendication 3, caractérisée en ce que l'installation de dissociation (1) est raccordée, côté des gaz de rejet, à un échangeur de chaleur (5) situé dans le circuit de chauffage du sécheur (2).

8. Installation suivant la revendication 4 ou la revendication 5, caractérisée en ce que l'installation d'absorption de SO₂ (6) est reliée, côté boues, au sécheur (2), en particulier après épaississement des boues, et en ce que l'installation de dissociation (1) est reliée, du côté du produit solide, au circuit de liquéfaction de l'installation d'absorption de SO₂ (6).

9. Installation suivant la revendication 3, caractérisée en ce que le courant partiel de buées non recyclé est relié, par l'intermédiaire d'un compresseur (7), suivant la technique thermique, au préchauffeur d'air (8), fonctionnant à la vapeur, du générateur de vapeur (9), avant l'installation d'absorption de SO₂ (6).

10. Installation suivant la revendication 3, caractérisée en ce que le courant de gaz de rejet riche en oxygène de l'installation de dissociation (1), après la récupération de chaleur pour l'installation de séchage (2) et l'installation de dissociation (1), est insufflé, comme apport d'oxygène, dans la chambre de combustion du générateur de vapeur (9), avant l'installation d'absorption de SO₂ (6).
